# EUROPEAN PATENT SPECIFICATION

(11) **EP 1 149 799 B1**
(45) Date of publication and mention of the grant of the patent: **08.10.2003**
(21) Application number: 01109122.0
(22) Date of filing: 12.04.2001
(51) Int. Cl.: C01B 3/40

(54) **Process for the production of a hydrogen rich gas**
Verfahren zur Herstellung eines wasserstoffreichen Gases
Procédé de production d' un gaz riche en hydrogène

(30) Priority: 27.04.2000 DK 200000698
(43) Date of publication of application: 31.10.2001
(73) Proprietor: Haldor Topsoe A/S, 2800 Kgs. Lyngby (DK)
(72) Inventor: Schiodt, Niels Christian, 2700 Bronshoj (DK); Aasberg-Petersen, Kim, 2840 Holte (DK); Nielsen, Poul Erik Hojlund, 3480 Fredensborg (DK); Lehrmann, Peter, 3460 Birkerod (DK)
(74) Representative: Grünecker, Kinkeldey, Stockmair & Schwanhäusser Anwaltssozietät

(56) References cited:
- US-A- 4 131 569
- US-A- 4 711 930
- US-A- 4 835 132
- US-A- 4 933 313
- US-A- 5 387 408
- US-A- 5 494 653

## Description

### FIELD OF THE INVENTION

The present invention is related to the water gas shift reaction carried out at a temperature of at least 400°C. The water gas shift reaction (in short: the shift reaction) is a gas phase equilibrium reaction:

CO (g) + H₂O (g) = CO₂ (g) + H₂ (g)

The reaction equilibrium is of central importance for any process that involves synthesis gas; i.e. steam reforming, the ammonia synthesis, hydrogen and reducing gases production etc. Thus, an effluent stream from a steam reforming process may be enriched in hydrogen by contacting the stream with a catalyst that promotes the shift reaction.

### BACKGROUND OF THE INVENTION

The shift reaction is exothermic and low temperatures favour CO-conversion. Thus, the lower the temperature, the more a synthesis gas will be shifted towards CO₂ + H₂, provided that the gas is contacted with a sufficiently active shift catalyst. It is common practice to distinguish between carrying out the shift reaction at below 300°C (typically 180-300°C, low temperature shift) and above 300°C (typically 300-500°C, high temperature shift). The lower the temperature, the higher the CO-conversion achieved. On the other hand, it is beneficial to convert part of the CO at higher temperatures to get a closer approach to equilibrium, when the gas is cooled and to allow for recovery of the reaction heat at a sufficiently high temperature to generate super heated steam. For these reasons, in many industrial plants that produce and/or utilise hydrogen, it is common practice to have a high-temperature shift unit for bulk CO-conversion and super heated steam generation followed by a low temperature shift unit to ensure a more complete CO-conversion.

To optimise formation of super heated steam, conditions for the high temperature shift unit may preferably be even higher than 500°C, since the effluent stream of a steam reforming process is typically at a temperature of above 800°C at the exit of the steam reforming unit. At such high temperatures, however, the conventionally used iron-chromium shift catalysts suffer from rapid deactivation and loss of selectivity due to Fisher-Tropsch synthesis, resulting in the formation of hydrocarbons, particularly methane.

For some applications, instead of forming super heated steam, recuperation of the shift reaction heat for driving another (endothermic) chemical reaction is desirable. An example of such other reaction is steam reforming. A possible application of the present invention related to this matter would be in so-called heat exchange reforming units.

A related issue of high importance in synthesis gas industry is the steam/carbon ratio (S/C ratio) of the synthesis gas. It is very desirable to perform the steam reforming reaction at as low a S/C ratio as possible from the point of view of process economics. On the other hand, the lower the S/C ratio, the higher the hydrocarbon by-product formation in the following shift unit by the conventional iron-chromium catalysts. Therefore, the industrial practice concerning synthesis gas conversion has been to settle with a certain minimum S/C-ratio and a certain upper temperature limit of operation of the high temperature shift unit.

Yet another important matter relates to the temperature at which the shift reaction is equilibrated. It is well known that hot carbon monoxide containing gases have a severe corrosive effect on many of the typical alloys, which are used as construction materials in industrial plants. The corrosion phenomenon is broadly known as metal dusting and is observed as such accompanied by the formation of pit holes in the materials in contact with the gas. The metal dusting problem is most pronounced in materials, which are in contact with the CO-containing gases at temperatures of between 500°C and 650°C. Thus, the possibility of equilibrating the water gas shift reaction at a temperature above 650°C would result in decreased corrosiveness of the gas due to the lower content of carbon monoxide.

### DESCRIPTION OF PRIOR ART

Industrial water gas shift is described in several publications; e.g. L. Lloyd et al in M. V. Twigg "Catalyst Handbook" Manson Publ., 1996 and J. R. Rostrup-Nielsen & P. E. Højlund-Nielsen in J. Oudar & H. Wise "Deactivation and Poisoning of Catalysts" Marcel Dekker 1985.

For industrial high temperature water gas shift, the catalysts used at present are based on iron as the active metal component. The preferred formulation has long been an iron-chromium catalyst as disclosed in e.g. US Patent No. 4,861,745. In EP 634,990 B1, chromium-free high temperature shift catalysts are claimed, but these catalysts are still based on iron as the active metal. Iron based catalysts are also mentioned in EP 062,410 B1.

EP patent application no. 0,189,701 discloses a sulphur resistant Shift catalyst based on oxides of molybdenum, vanadium or wolfram, and includes a promoter based on cobalt and/or nickel, and a support material based on cerium- or zirconium oxide. This catalyst can be employed at temperatures of 200-300°C, and improved hydrogen selectivity is obtained.

There is no indication in the EP document that use of this catalyst leads to the suppression of methane production. Furthermore, application of this catalyst above 400°C would lead to excessive methanation due to the presence of cobalt or nickel.

EP patent no. 0,205,130 and US patent no. 5,128,307 disclose catalysts based on copper for low temperature Shift reactions. The presence of various basic metal oxides acting as promoters from Group 1 and magnesium, calcium and barium leads to the suppression of by-products. K₂O is mentioned as being preferable.

At temperatures above 350°C, copper is deactivated and cannot be used as a catalyst. This is due to the increased mobility of copper at these temperatures, and this mobility leads to copper being sintered. The catalyst is thus deactivated. The various basic compounds mentioned function as promoters and do not have any catalytic activity. They therefore cannot be related to any reactant conversion.

US Patent No. 4,598,062 teaches that the addition of magnesium compounds to iron-chromium high temperature shift catalysts results in improved mechanical strength and less hydrocarbon by-product formation. Basically, however, this is a modification of the iron-chromium catalyst since the patent claims a catalyst composition with no more than 6% magnesium oxide.

Magnesium oxide as a promoter for the Fe/Cr catalyst is disclosed in US Patent No. 4,933,413. This patent also claims decreased formation of hydrocarbon by-products. The examples are carried out at a temperature of 360°C and a S/C ratio of 2.5; thus at much less severe conditions than the examples disclosed in the present invention.

Similarly, alumina is claimed as a minor catalyst constituent in US Patent Nos. 5,021,233 and 4,503,162. Finally, copper spinels have been mentioned as high-temperature shift catalysts in US Patent No. 3,787,323 and EP 42,471 B1 and copper-iron spinels and related copper-iron mixed oxides are disclosed in US Patent No. 4,524,058.

### SUMMARY OF THE INVENTION

It is an object of the present invention to provide a process for producing a hydrogen rich gas by contacting an effluent gas from a steam reforming unit with a basic metal oxide catalyst at high temperatures, preferably from 400°C to 850°C, with significantly less hydrocarbon by-product formation than may be accomplished by contact with a conventional iron-chromium high temperature shift catalyst. The invention is in particular useful in the following industrial applications:
i. Increased formation of super heated steam in industrial plants, which produce synthesis gas.
ii. Increased energy efficiency in synthesis gas production by transfer of at least a part of the heat formed by equilibrating the shift reaction, to the synthesis gas producing unit, which may be part of e.g. a hydrogen plant, an ammonia plant and/or a fuel processing unit.
iii. Operations at lower steam/carbon ratios in steam reforming units without hydrocarbon by-product formation in a subsequent high temperature shift unit.
iv. Decreased risk of metal dusting in construction materials being in contact with synthesis gas by conversion of a part of the carbon monoxide in the synthesis gas at a temperature of at least 500°C.

The catalysts employed in the process according to the invention can also be used in heat exchanger catalysed hardware. Heat exchanger catalysed hardware has the advantage of providing an improved heat transport away from the catalyst without excessive pressure drop.

### DETAILED DESCRIPTION OF THE INVENTION

The scope of the present invention is to perform the water gas shift reaction at very high temperatures and/or at low steam/carbon ratio without concomitant formation of hydrocarbons, with improved energy efficiency due to increased formation of super heated steam and/or recuperation of the reaction heat of the shift reaction, and less corrosiveness of the synthesis gas.

A range of materials has been tested as catalysts for the water gas shift reaction in the temperature region from 400°C to 650°C and in some cases from 400°C to 750°C. Some of them have been tested at various steam/carbon ratios and various space velocities. Usually, at such high temperatures, hydrocarbon formation becomes excessive and catalyst deactivation occurs. This was confirmed with a conventional iron-chromium high temperature shift catalyst and with several catalysts containing compounds of transition metals such as iron, cobalt, copper etc.

Therefore, it was surprising that with catalysts comprised by basic oxides of main group metals, rare earth metals or mixtures thereof in crystalline or amorphic form, significant CO-conversion was observed while essentially no hydrocarbons were formed, and with some of the catalysts little or no deactivation was observed.

One of the most active catalysts was a catalyst comprised by magnesium oxide stabilised with alumina (catalyst B). Even at a very low steam/carbon ratio, no detectable amount of hydrocarbons was formed within 24 hours on stream at 650°C. For comparison, with the conventional iron-chromium high temperature shift catalyst, at similar conditions, the contents of methane in the effluent gas amounted to approximately 3.5%. Catalyst B was also tested at a temperature of 750°C with no detectable hydrocarbon formation.

Even more surprising is that this catalyst does not seem to deactivate significantly after 17 hours on stream at 750°C.

Catalysts that were found to be active for promoting the shift reaction without forming hydrocarbons were oxides of magnesium, manganese, aluminium, zirconium, lanthanum, cerium, praseodymium and neodymium and mixtures of these metals, as will be demonstrated in the following Examples 1-19 and 32. Common to these oxides is that they are basic and that they do not contain transition elements in an oxidation state lower than the group number. For comparison, in Example 20, a catalyst which is well known to carry only acidic sites (the zeolite H-ZSM5) is demonstrated to be completely inactive, while in Example 21 as the potassium ion-exchanged zeolite K-ZSM5 (thus transformed to a more basic catalyst) is catalytically active. Although the activity is low - presumably due to steaming of the catalyst resulting in loss of surface area - ion-exchanging ZSM5 results in the formation of an active catalyst. Thus, without the wish to connect this invention to any particular theory, we have indicated that the activity of non-transition metal catalysts for equilibrating the shift reaction is due to basic sites on the catalyst.

The basic oxide catalysts have also the advantage of being tolerant towards sulphur, which element is often found in natural gas as hydrogen sulphide and organic sulphides.

For the sake of comparison, a number of catalysts based on transition metals were tested under similar conditions. Examples 22-31 demonstrate that although a somewhat higher conversion, particularly at lower temperatures, is achieved with catalysts containing transition metals such as Cu, Fe, Cr, Mn and Co, methane formation is always observed with these catalysts. A typical industrially used iron-chromium high temperature shift catalyst is included in these examples.

Of these transition metal based catalysts, catalyst N containing Mn is preferred since the amount of methane is very limited (Example 30).

The effect of decreasing the steam/carbon ratio is demonstrated in Examples 33-35.

The effect of increased GHSV is illustrated by Examples 36-38.

An overview of the materials used as catalysts for the water gas shift reaction in the following examples is shown in Table 1 and Table 2. The catalysts comprise catalyst A (spinel, MgAl₂O₄), catalyst B (magnesia, MgO stabilised with alumina), catalyst C (zirconia), catalyst D (1% wt/wt Mg on MgAl₂O₄), catalyst E (10% La on MgAl₂O₄), catalyst F (5% La on MgAl₂O₄), catalyst G (H-ZSM5), catalyst H (K-ZSM5), catalyst I (chromium stabilised ZnO), catalyst J (chromium stabilised Fe₃O₄, industrial iron-chromium high temperature shift catalyst), catalyst K (1% W on MgAl₂O₄), catalyst L (1% Cu on MgAl₂O₄), catalyst M (1% Co on MgAl₂O₄), catalyst N (1% Mn on MgAl₂O₄), catalyst O (1% Fe on MgAl₂O₄), catalyst P (3% wt/wt Mg on zirconia) and catalyst Q (10% mixed rare earths on MgAl₂O₄; the mixture contains approximately 5.2% Ce, 77.8% La, 7.0% Nd, 8.8% Pr).

The catalysts D, E, F, K, L, M, N, O, P and Q were prepared by incipient wetness impregnation according to the dry impregnation method with aqueous solutions of metal nitrate salts on spinel, dried for 8 hours at 120°C and calcined at 680°C for 2 hours.

All catalysts were grained in a mortar and sieved. The fraction 0.85-1.70 mm was used in all cases.

### Example 1

In a copper lined, tubular reactor (outer diameter 9.53 mm, inner diameter 4.6 mm) embedded in a heating device, 1.00 g of catalyst A (bed volume 1.45 ml) was arranged in fixed bed manner. Dry gas and steam were admixed at a temperature of 200°C and a pressure of 25 barg before entering the reactor. The dimensions of the reactor allowed for the gas to be further heated to the desired temperature before reaching the catalyst. The temperature was controlled externally and monitored by a thermocouple on the reactor outside the centre of the catalyst bed. At a position after the catalyst zone the exit gas was cooled and depressurised to ambient conditions. The water in the exit gas was condensed in a separate container, while the remaining dry gas was analysed continuously for CO and CO₂ by means of a BINOS infrared sensor, thus monitoring the effect of the catalyst on the gas composition during heating and cooling. The dry exit gas was also regularly analysed by Gas Chromatography (GC) allowing for measurement of CO, CO₂, H₂, CH₄, higher hydrocarbons and Ar. Ar was used as an internal standard. The temperature of the reactor was raised at a rate of 4°C min⁻¹ starting from between 200°C and 300°C until a temperature of approximately 650°C was reached. During this heating period, the contents of CO in the dry exit gas (measured continuously by means of the BINOS apparatus) was used for obtaining the CO-conversion as a function of temperature. The dry feed gas was introduced at a rate of 10 Nl h⁻¹ with the composition 74.4% H₂, 12.6% CO, 10.0% CO₂, 3.0% Ar, while water was fed at a rate of 3.96 g h⁻¹. The Gas Hourly Space Velocity (GHSV) in this experiment thus amounts to 6900 h⁻¹ calculated on basis of dry gas flow. The CO-conversion at 500°C was 22.9%. The theoretical CO-conversion at equilibrium at this temperature and gas composition is 50.9%. At 575°C the conversion was 29.6% and the maximum conversion 34.2%. After having reached a temperature of 650°C (CO-conversion = 19.1%, equilibrium) the temperature was stabilised and the effluent gas was regularly analysed by GC. The first GC-analysis obtained within one hour at 650°C confirmed the equilibrium composition of the gas with respect to H₂, CO and CO₂, and showed methane content of 57 ppm. No higher hydrocarbons were observed. GC-samples were withdrawn regularly for 24 hours, while maintaining the temperature, flow and feed gas composition. After this period, the methane content was below the detection limit (15 ppm) of the GC equipment. After the 24 hour on stream, the CO-conversion was still 19.1%, equal to the equilibrium value. The results are summarised in Table 1.

### Example 2

This experiment was an exact reproduction of example 1 carried out with a fresh catalyst sample, apart from a slightly higher water flow of 4.00 g h⁻¹. The CO-conversion at 500°C was found to be 22.3% (51.2% at equilibrium) and at 575°C 29.6% (34.5% at equilibrium) thus within experimental uncertainty the same conversions as in Example 1. Initial methane formation at 650°C was 60 ppm. The temperature and feed flow was maintained for 21 hours after which Time On Stream (TOS) the methane level was measured to be 121 ppm.

### Example 3

This experiment is a continuation of example 2 using the same catalyst sample. The temperature was lowered to 300°C and immediately heated again as described in example 1. While the temperature was rising, the conversions at 500°C and 575°C were measured and the results are displayed in Table 1. The deactivation is substantial, but at 650°C the equilibrium CO-conversion of 19.5% was reached. The methane level was initially 119 ppm, and this value decreased to 102 ppm after 48 hours total TOS.

The small deviations from one experiment to another on the equilibrium conversions is due to small variations in the water flow, which was difficult to maintain at a constant level with a deviation of ± 3% with the equipment used. Therefore, the steam/carbon (S/C) ratio is reported for every example in Table 1.

### Example 4

This example is a continuation of example 3 using the same catalyst sample. The temperature was lowered and raised again as described in example 3. As seen from Table 1, the additional 41 hours TOS has resulted in only a slight deactivation. Equilibrium conversion was reached at 650°C. The methane level was initially 69 ppm and after 89 hours TOS was found to be 63 ppm. No higher hydrocarbons were observed.

### Example 5

This example was carried out as described in example 1, but with no catalyst. As shown in Table 1, no CO-conversion took place and no methane formation occurred.

### Example 6-31

These examples were carried out as outlined in the previous examples except for the use of different catalysts. Comparative examples are included, with e.g. an industrial iron-chromium catalyst (catalyst J), a copper-containing catalyst (catalyst L) and various transition metal containing catalysts (catalysts I, K, M, N and O). The results are reported in Table 1. With all these catalysts, equilibrium was reached at a temperature of 650°C or less. At the relatively low temperature of 400°C, small but significant CO-conversion was observed. Thus, with catalyst B (example 7), the CO-conversion was found to be 5.2% (equilibrium value 75.1%) and with catalyst N (example 30), the CO-conversion was found to be 8.5% (equilibrium 75.1%).

### Example 32

This example was carried out as outlined in the previous examples, but with catalyst P; a 3% Mg on zirconia. The results are shown in Table 1. With this catalyst, equilibrium was reached slightly below 600°C.

### Example 33-38

These examples were carried out as described in previous examples except for variations in steam/carbon ratio and GHSV as outlined in Table 1.

### Example 39-41

These examples were carried out as explained in the previous examples except that the temperature of the reactor was raised until a temperature of approximately 750°C was reached. The results are reported in Table 2. The catalysts tested in these examples are catalyst B and catalyst Q (10% mixed rare earths on MgAl₂O₄; the mixture contains approximately 5.2% Ce, 77.8% La, 7.0% Nd, 8.8% Pr).

**Table 1**

| Exp No | Catalyst | Approx. Composition | gas mixt (*) | S/C | GHSV 10³ h⁻¹ | % CO conv at 500°C (max % CO conversion) | | % CO conv at 575°C (max % CO conversion) | | CH₄ init. at 650°C (ppm) | Time on stream at 650°C (h) | CH₄ final at 650°C (ppm) |
|---|---|---|---|---|---|---|---|---|---|---|---|---|
| 1 | Catalyst A | MgAl₂O₄ | i | 2.18 | 6.9 | 22.9 | (50.9) | 29.6 | (34.2) | 57 | 24 | <15 |
| 2 | Catalyst A | MgAl₂O₄ | i | 2.20 | 6.9 | 22.3 | (51.2) | 29.6 | (34.5) | 60 | 21 | 121 |
| 3 | cont | - " - | i | 2.20 | 6.9 | 6.9 | (51.3) | 18.6 | (34.6) | 119 | 48 | 102 |
| 4 | cont | - " - | i | 2.21 | 6.9 | 4.7 | (51.4) | 14.9 | (34.7) | 69 | 89 | 63 |
| 5 | no catalyst | | i | 2.05 | | 0.1 | (48.8) | 0.1 | (31.9) | 0 | 4 | 0 |
| 6 | Catalyst B | MgO | i | 2.34 | 9.2 | 36.8 | (53.4) | 32.3 | (37.0) | 0 | 19 | 0 |
| 7 | cont | - " **-** | i | 2.35 | 9.2 | 40.2 | (53.6) | 33.4 | (37.1) | 0 | 100 | 0 |
| 8 | cont | - " - | i | 2.34 | 9.2 | 39.0 | (53.4) | 33.3 | (36.9) | 0 | 114 | 0 |
| 9 | Catalyst C | ZrO₂ | i | 2.36 | 13.0 | 16.8 | (53.6) | 25.9 | (37.2) | 0 | 19 | 0 |
| 10 | cont | - " - | i | 2.36 | 13.0 | 16.5 | (53.7) | 25.9 | (37.2) | 0 | 44 | 0 |
| 11 | Catalyst D | 1% Mg^{#} | i | 2.20 | 7.0 | 25.7 | (51.3) | 30.1 | (34.6) | 0 | 22 | 0 |
| 12 | Catalyst E | 104 La^{#} | i | 2.38 | 8.0 | 30.3 | (54.0) | 33.1 | (37.6) | 54 | 19 | 29 |
| 13 | cont | - " **-** | i | 2.36 | 8.0 | 21.5 | (53.7) | 31.6 | (37.3) | 14 | 37 | <15 |
| 14 | cont | - " - | i | 2.36 | 8.0 | 19.3 | (53.6) | 31.2 | (37.2) | <15 | 86 | 0 |
| 15 | cont | - " - | i | 2.36 | 8.0 | 18.7 | (53.7) | 30.8 | (37.2) | 0 | 117 | 0 |
| 16 | Catalyst F | 5% La^{#} | i | 2.34 | 7.6 | 29.2 | (53.4) | 33.2 | (37.0) | 42 | 44 | 20 |
| 17 | cont | - " - | i | 2.36 | 7.6 | 16.7 | (54.0) | 30.1 | (37.6) | 19 | 60 | 0 |
| 18 | cont | - " - | i | 2.38 | 7.6 | 14.7 | (53.7) | 29.1 | (37.2) | 0 | 86 | 0 |
| 19 | cont | - " **-** | i | 2.34 | 7.6 | 14.1 | (53.8) | 28.8 | (37.41 | 0 | 114 | 0 |
| 20 | Catalyst G | H-ZSM5 | i | 2.23 | 6.5 | 0.0 | (51.8) | 0.1 | (35.1) | 16 | 4 | 15 |
| 21 | Catalyst H | K-ZSM5 | i | 2.24 | 6.6 | 5.8 | (51.8) | 7.5 | (35.2) | 30 | 3 | 20 |
| 22 | Catalyst I | Zn-Cr oxide | i | 2.23 | 9.8 | 47.1 | (51.8) | 35.9 | (35.1) | 148 | 4 | 150 |
| 23 | Catalyst J | Fe-Cr oxide | i | 2.36 | 10.0 | 49.5 | (53.7) | 34.5 | (37.2) | 524 | 19 | 290 |
| 24 | cont | - " - | i | 2.34 | 10.0 | 46.1 | (53.4) | 34.3 | (36.9) | 280 | 24 | 177 |
| 25 | cont | - " - | i | 2.34 | 10.0 | 45.1 | (53.4) | 34.1 | (36.9) | 175 | 43 | 159 |
| 26 | Catalyst K | 1% W^{#} | i | 2.22 | 7.0 | 13.3 | (51.6) | 24.9 | (34.9) | 24 | 17 | <15 |
| 27 | Catalyst L | 1% Cu^{#} | i | 2.36 | 7.0 | 50.5 | (53.6) | 33.5 | (37.2) | 50 | 18 | 98 |
| 28 | cont | - " - | i | 2.36 | 7.0 | 24.1 | (53.7) | 30.2 | (37.2) | n.m.^{###} | 23 | n.m.^{###} |
| 29 | Catalyst M | 1% Co^{#} | i | 2.37 | 7.0 | 39.8 | (53.8) | 34.5 | (37.4) | 330 | 5 | 1350 |
| 30 | Catalyst N | 1% Mn^{#} | i | 2.35 | 7.0 | 34.6 | (53.6) | 33.0 | (37.1) | < 15 | 3 | 30 |
| 31 | Catalyst O | 1% Fe^{#} | i | 2.36 | 7.0 | 34.9 | (53.6) | 34.0 | (37.2) | 45 | 5 | 133 |
| 32 | Catalyst P | 3% Mg^{##} | i | 2.30 | 13.0 | 21.1 | (52.9) | 32.8 | (36.3) | < 15 | 4 | < 15 |
| 33 | Catalyst J | Fe-Cr oxide | i | 1.51 | 10.0 | 32.2 | (37.3) | 16.7 | (20.0) | 25000 | 22 | 35000 |
| 34 | Catalyst B | MgO | i | 1.34 | 9.2 | 22.7 | (32.7) | 15.2 | (15.4) | <15 | 26 | <15 |
| 35 | no catalyst | | i | 1.34 | | 0.0 | (32.9) | 0.0 | (15.6) | 0 | 16 | 0 |
| 36 | Catalyst B | MgO | i | 2.33 | 18.4 | 34.8 | (53.5) | 30.8 | (37.0) | 0 | 16 | 0 |
| 37 | Catalyst B | MgO | i | 2.33 | 36.8 | 29.1 | (53.3) | 29.4 | (36.8) | n.m.^{###} | 4 | n.m.^{###} |
| 38 | Catalyst B | MgO | i | 2.35 | 46.0 | 19.6 | (53.5) | 26.5 | (37.0) | n.m.^{###} | 4 | n.m.^{###} |

| | | | | | | | | | | | | |
|---|---|---|---|---|---|---|---|---|---|---|---|---|
| (*)Gas mixture (i): 74.4 % H₂, 12.6 % CO, 10.0 % CO₂, 3.0 % Ar | | | | | | | | | | | | |
| ^{#} impregnated on MgAl₂O₄, | | | | | | | | | | | | |
| ^{##} impregnated" on ZrO₂, | | | | | | | | | | | | |
| ^{###} n.m. : not measured | | | | | | | | | | | | |

**Table 2**

| Exp No | Catalyst | Approx. Composition | gas mixt (*) | S/C | GHSV 10³ h⁻¹ | % CO conv at 500°C (max % CO conversion) | | % CO conv at 575°C (max % CO conversion) | | CH₄ init. at 750°C (ppm) | Time on stream at 750°C (h) | CH₄ final at 750°C (ppm) |
|---|---|---|---|---|---|---|---|---|---|---|---|---|
| 39 | Catalyst B | MgO | i | 2.40 | 9.2 | 41.5 | (54.3) | 35.6 | (37.9) | 0 | 17 | 0 |
| 90 | cont | - " **-** | i | 2.38 | 9.2 | 42.4 | (53.9) | 34.2 | (37.5) | 0 | 23 | 0 |
| 41 | Catalyst Q | 10% Lnⁿ | i | 2.34 | 8.0 | 22.4 | (53.4) | 32.3 | (36.9) | n.m. | 1 | 105 |

| | | | | | | | | | | | | |
|---|---|---|---|---|---|---|---|---|---|---|---|---|
| (*)Gas mixture (i): 74.4 % H₂, 12.6 % CO, 10.0 % CO₂, 3.0 % Ar | | | | | | | | | | | | |
| ⁿ10% mixture of lanthanides on MgAl₂O₄ | | | | | | | | | | | | |

## Claims

1. Process for the production of a hydrogen rich gas without formation of hydrocarbons comprising water gas shift conversion of a gas containing carbon monoxide and steam at a temperature of between 400°C and 850°C in the presence of a basic metal oxide catalyst, which catalyst comprises one or more of the elements Mg, Mn, Al, Zr, La, Ce, Pr, and Nd, and mixtures thereof.

2. Process of claim 1, wherein said elements are selected from one or more of the metals Mg, Mn, Al, La, Zr.

3. Process of claim 1, wherein said elements are selected from Mg, Mn, Al, La, Zr.

4. Process of claim 1, wherein the carbon monoxide and steam containing gas is an effluent stream from a gasification process.

5. Process of claim 1, wherein said catalyst is in the form of a monolith.

6. Process of claim 1, wherein said catalyst forms at least part of the inner surface of the tube through which feed gas is transported.

7. Process of claim 1, wherein said catalyst forms at least part of the inner surface of the heat exchanger through which feed gas is transported.

8. Process according to anyone of the preceding claims, wherein said catalyst further contains alkali metals.

## Patentansprüche

1. Verfahren zur Herstellung eines wasserstoffreichen Gases ohne die Bildung von Kohlenwasserstoffen, umfassend eine Wassergasverschiebungsumwandlung eines Gases, enthaltend Kohlenmonoxid und Dampf bei einer Temperatur zwischen 400°C und 850°C in der Gegenwart eines basischen Metalloxidkatalysators, wobei der Katalysator mindestens eines der Elemente Mg, Mn, Al, Zr, La, Ce, Pr und Nd und Gemische davon umfasst.

2. Das Verfahren nach Anspruch 1, wobei die Elemente ausgewählt werden aus mindestens einem der Metalle Mg, Mn, Al, La, Zr.

3. Das Verfahren nach Anspruch 1, wobei die Elemente ausgewählt werden aus Mg, Mn, Al, La, Zr.

4. Das Verfahren nach Anspruch 1, wobei das Kohlenmonoxid und Dampf enthaltende Gas ein Abgasstrom aus einem Vergasungsverfahren ist.

5. Das Verfahren nach Anspruch 1, wobei der Katalysator in Form eines Monolithen vorliegt.

6. Das Verfahren nach Anspruch 1, wobei der Katalysator wenigstens einen Teil der inneren Oberfläche des Rohres bildet, durch das das Feedgas transportiert wird.

7. Das Verfahren nach Anspruch 1, wobei der Katalysator wenigstens einen Teil der inneren Oberfläche des Wärmetauschers bildet, durch den das Feedgas transportiert wird.

8. Das Verfahren nach einem der vorhergehenden Ansprüche, wobei der Katalysator außerdem Alkalimetalle enthält.

## Revendications

1. Procédé de production d'un gaz riche en hydrogène sans formation d'hydrocarbures comprenant une conversion catalytique de la vapeur d'eau d'un gaz contenant du monoxyde de carbone et de la vapeur d'eau à une température entre 400°C et 850°C en présence d'un catalyseur à oxyde de métal basique, lequel catalyseur comprend un ou plusieurs des éléments Mg, Mn, Al, Zr, La, Ce, Pr, et Nd, et des mélanges de ceux-là.

2. Procédé selon la revendication 1, dans lequel lesdits éléments sont choisis parmi un ou plusieurs des métaux Mg, Mn, Al, La, Zr.

3. Procédé selon la revendication 1, dans lequel lesdits éléments sont choisis parmi Mg, Mn, Al, La, Zr.

4. Procédé selon la revendication 1, dans lequel le gaz contenant le monoxyde de carbone et la vapeur d'eau est un courant effluent d'un processus de gazéification.

5. Procédé selon la revendication 1, dans lequel ledit catalyseur est sous la forme d'un bloc.

6. Procédé selon la revendication 1, dans lequel ledit catalyseur forme au moins une partie de la surface interne du tube à travers lequel le gaz d'alimentation est transporté.

7. Procédé selon la revendication 1, dans lequel ledit catalyseur forme au moins une partie de la surface interne de l'échangeur de chaleur à travers lequel le gaz d'alimentation est transporté.

8. Procédé selon l'une quelconque des revendications précédentes, dans lequel ledit catalyseur contient en outre des métaux alcalins.
